# EUROPEAN PATENT APPLICATION

(11) **EP 0 916 550 A1**
(43) Date of publication of application: **19.05.1999**
(21) Application number: 97309096.2
(22) Date of filing: 12.11.1997
(51) Int. Cl.: B60N 2/24, B61D 33/00

(54) **Improvements in or relating to seats**

(71) Applicant: Transintech Limited, Derby DE24 8AP (GB)
(72) Inventor: Knowles, Mark Geoffrey Derby Carriage Works, Derby, DE24 8AP (GB); Burrows, Andrew John, Nottingham NG16 1QU (GB); McGeehin, Peter Derby Carriage Works, Derby, DE 24 8 AP (GB)
(74) Representative: Swindell & Pearson

(57) **Abstract**

A seat (10) comprises a back support portion (12) for supporting the back of a person seated therein, and a pelvic support portion (14) extending below and forwardly of the back support portion (12) for support to the pelvic region of the person. The pelvic support portion (14) includes a central area to receive the pelvic region of the person, and force absorbing means (24) arranged at said central area. The force absorbing means (24) has a substantially triangular cross-sectional configuration and is adapted to absorb at least some of a force applied to the seat in a forward direction. The central area may have a large surface area to protect the legs of the person behind. The seat (10) may include first and second force absorbing means arranged at opposite sides of the central area. The seat (10) may also include a heat support portion (16). The back support portion (12) and the head support portion (16) comprises a rear member (20) and the back support portion includes force absorbing means tapering inwardly to the rear member (20) at the head support portion (16). The seat may further include a leg support portion (18) for supporting the legs of the person seated. The leg support portion (18) has a collapsible front area.

## Description

This invention relates to seats. More particularly, but not exclusively, this invention relates to seats for use in trains, or other public transport vehicles such as coaches and buses for use on the road.

A disadvantage of known seats for use in trains, buses or coaches that they provide insufficient protection in the event of a crash.

According to a first aspect of this invention there is provided a seat comprising a back support portion for supporting the back of a person, and a pelvic support portion extending below and forwardly of the back support portion for supporting the pelvic region of the person, wherein the pelvic support portion comprises a central area to receive the pelvic region of the person, and force absorbing means arranged at said central area, the force absorbing means having a generally triangular cross-sectional configuration, whereby the force absorbing means is adapted to absorb at least some of a force applied to the seat in the forward direction. Preferably, the seat includes first and second force absorbing means arranged at opposite sides of said central area.

The seat may include a rear member extending from the back support portion to the pelvic support portion. The seat may also include a skirting member, which may extend at least part way, and preferably, the whole way around the rear member.

Preferably, the force absorbing means is adapted to fail progressively when said force is applied.

The or each force absorbing means conveniently comprises a wall member extending from the skirting member to the rear member to define said generally triangular configuration. A flange member may be provided, said flange member preferably extending substantially parallel to the skirting member and may be in engagement with said skirting member. Conveniently, the force absorbing means is secured to the skirting member.

Thus, an initial force applied to the seat to move the back support portion forwardly can cause the flange member to buckle. Thereafter, applying a further force to move the back portion forwardly can cause the wall member to fail progressively, for example by cracking. Thereby, the force absorbing means absorbs progressively a force applied to the seat such as to move the back portion forwardly of the pelvic support portion. In the preferred embodiment, the initial force to buckle the flange member will be larger than the further force to cause the wall member to crack.

Preferably, the or each force absorbing means is formed of a material which is able to undergo brittle fracture failure, i.e. it is substantially fully elastic to failure and thereafter can support substantially no further load. A suitable such material is a reinforced plastics material, for example a glass fibre reinforced plastics material.

The wall member may include a transverse portion extending transversely from the flange member. Preferably, the transverse portion extends substantially perpendicularly from the flange member. The transverse portion may increase progressively in width from the flange member in the direction from the upper end of the pelvic support portion to the lower end thereof.

The wall member may be in the form of an elongate substantially flat member extending along the seat at an oblique angle to said skirting member and said rear member.

According to a second aspect of this invention there is provided a seat comprising a back support portion for supporting the back of a person, a pelvic support portion extending below and forwardly of the back support portion, and a head support portion extending above the back support portion, the back support portion and the head support portion comprising a rear member, and the back support portion including force absorbing means wherein the force absorbing means tapers inwardly to the rear member at the head support portion to reduce rigidity at said head support portion. Preferably, the back support portion includes force absorbing means at either side of the back support portion.

Preferably, the force absorbing means comprises an elongate element extending from the back support portion to the head support portion. The elongate portion may comprise a wall member defining a hollow space with the rear member. The wall member preferably tapers toward said rear member.

A skirting member may be provided which extends outwardly from the rear member. The wall member preferably extends between the rear member and the wall member such that the force absorbing means is preferably of a generally triangular cross-section.

Preferably, the rear member at the head support portion includes a raised area and a surrounding area, the surrounding area being preferably substantially co-planar with said back support portion.

According to a third aspect of this invention there is provided a seat comprising a back support portion for supporting the back of a person and a pelvic support portion extending below and forwardly of the back support portion, for supporting the pelvic region of the person, wherein the pelvic support portion comprises a central area having a large surface area. Thus, the pelvic support portion presents a surface area to the legs of a further person in a seat behind facing in the same direction, which surface area is of sufficient size to cushion the legs of said further person in the event of said further person's legs striking the pelvic support portion of said seat during a crash.

Preferably, the pelvic support portion further includes a downwardly extending member, at the lower region of said pelvic support portion. This has the advantage of further cushioning the legs of the person in the seat behind and preventing the legs from striking the mounting upon which the seat is mounted.

The pelvic support portion may curve outwardly and rearwardly of the seat. The surface area of said central area may be provided by a radius of curvature of said pelvic support portion greater than substantially 0.01m, preferably greater than substantially 0.1m, desirably greater than substantially 0.5m, conveniently greater than 1m, or which may be planar.

According to a fourth aspect of the invention there is provided a seat comprising a back support portion for supporting the back of a person, a pelvic support portion for supporting the pelvic region of the person, and a leg support portion for supporting the legs of a person, the leg support portion having a collapsible front area, advantageously, adapted to collapse on impact thereon of the legs of a person seated opposite. Thus, the seat presents to a further person sitting in a seat opposite and facing in the opposite direction, a large surface area at the leg support portion, thereby cushioning the legs of said person in the event of said person's legs striking the leg support portion of said seat during a crash.

Preferably the front area is curved outwardly and advantageously has a large surface area.

The front area of the leg support region may curve outwardly. The surface area of said front area may be provided by a radius of curvature of the leg support portion greater than substantially 0.01m, preferably greater than substantially 0.05m, desirably greater than 0.1m, conveniently greater than 0.5m, or which may be planar.

Preferably, the leg support portion extends downwardly to define a recess to receive a mounting for the seat. This has the advantage of preventing the legs of said person striking the mounting upon which the seat is mounted.

Each of the above aspects of this invention may include any or all of the features of the others.

An embodiment of the invention will now be described by way of example only with reference to the accompanying drawings in which:-
Fig. 1 is a side view of a seat; and
Figs. 2A to 2D are views respectively along the arrows A-A, B-B, C-C and D-D of the planes so marked in Fig. 1.

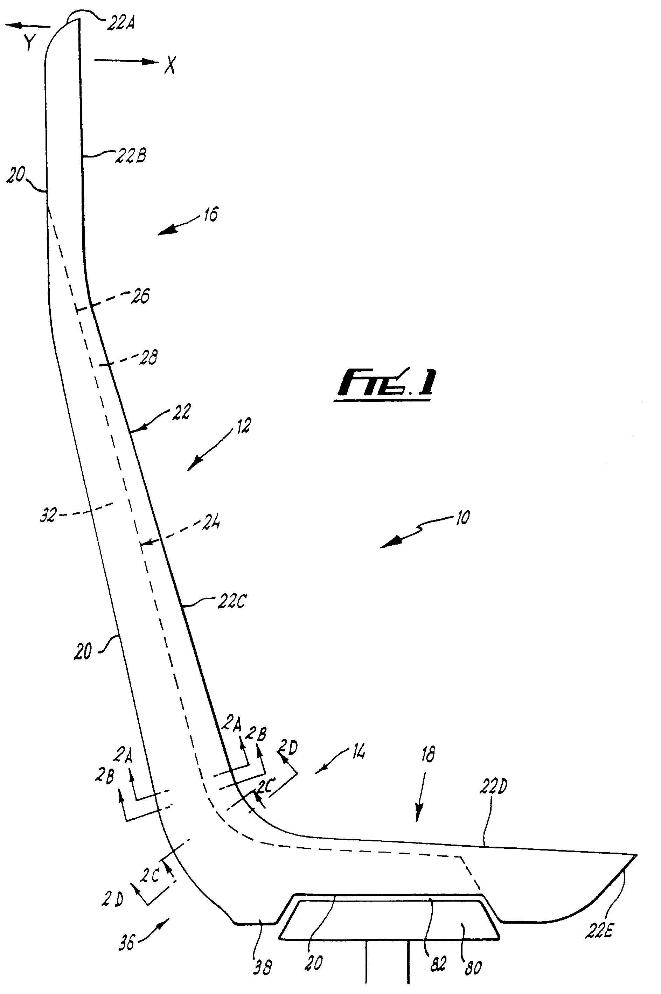

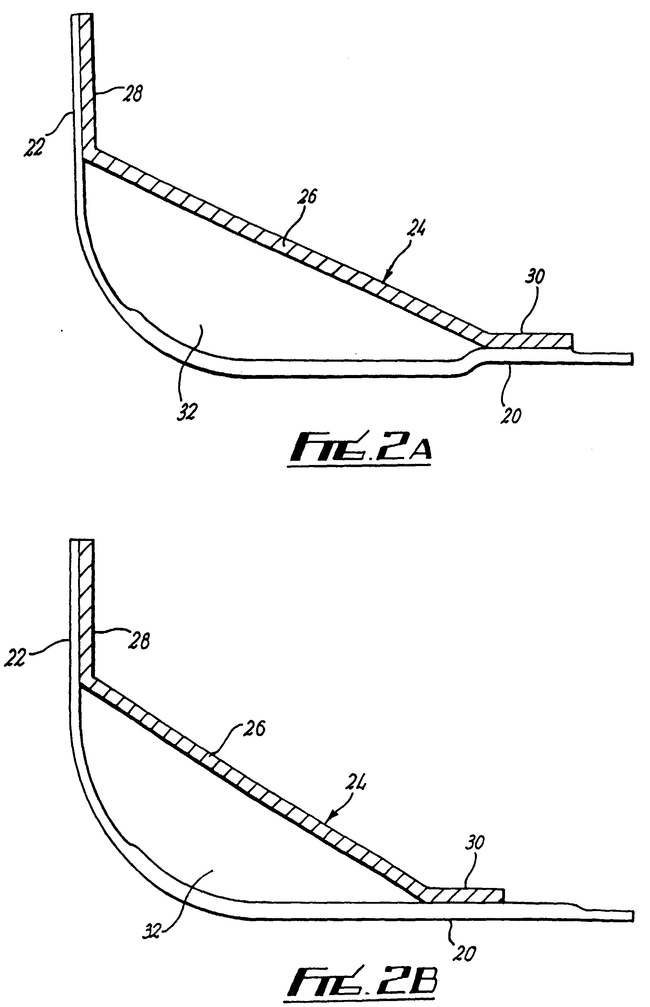

Referring to Fig. 1, there is shown a seat 10 suitable for use, for example, in a train. The seat 10 is formed of a suitable plastics material, for example an appropriate glass fibre reinforced plastics material of a type that would readily be appreciated by the person skilled in the art on reading this specification. Seat 10 comprises a back support portion 12 for supporting the back of the person sitting in the seat, a pelvic support portion 14 for supporting the pelvic region of the person, a head support portion 16 for supporting the head of the person, and a leg support portion 18 for supporting the legs of the person.

The seat 10 is formed of a rear member 20 extending from the head support portion 16 to the leg support portion 18, and a forwardly extending skirting member 22 provided at each side of the rear member 20. The portion of the skirting member 22 at the top of the head support portion 16 is designated 22A and that at the front of the leg support portion 18 is designated 22E. The skirting member 22 extends forwardly of the rear member 20 at the head support portion 16 and is designated 22B and at the back support portion 12 is designated 22C. The skirting member 22 extends upwardly of the rear member 20 at the leg support portion 18 and is designated 22D.

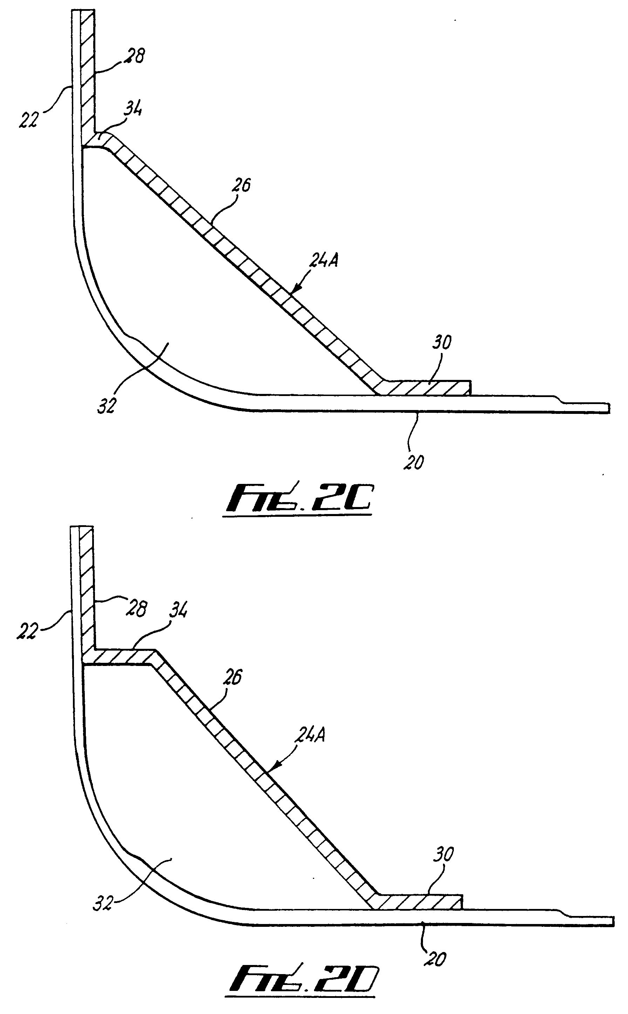

Strengthening means 24 is provided at each side of the rear member 20 tapering from the head support portion 16, as shown in Fig. 1, to the leg support portion 18, also as shown in Fig. 1. Referring to Figs. 2A to 2D, each strengthening means 24 comprises a wall member 26 having a flange member 28 extending parallel to the skirting member 22, and a securing rim 30 to be attached to the rear member 20. The flange member 28 can be attached to the skirting member 22. The attachment of the flange member 28 and the securing rim 30 can be by appropriate adhesive or by suitable attachment means, for example nuts and bolts.

The wall member 26 defines with the rear member 20 and the skirting member 22 a hollow space 32, which is generally triangular in configuration, as shown.

The construction of the strengthening means 24 is such that the wall member 26 extends from the rear member 20 to the skirting member 22, which lie substantially at right angles to one another. The actual cross-sectional profile of the hollow space 32 as shown in Figs. 2A to 2D is not precisely that of a triangle. The shape of this region could, with respect to Fig. 2A and 2B, be described as an area bounded by a curve and a chord, and, in Figs. 2C and 2D by a curve and two straight sections at an obtuse angle to one another. The expression "generally triangular" is, therefore, intended to cover those shapes which consist of an area bounded by three straight lines as well as the shapes shown in Figs. 2A to 2D, as described above.

In the pelvic support region 14, the strengthening means 24 defines force absorbing means, as shown in Figs. 2C and 2D, and designated for ease of understanding by the numeral 24A. In the force absorbing means 24A, the wall member 26 comprises a transverse portion 34 which, as shown in Figs. 2C and 2D increases in width progressively from the section shown in Fig. 2C to the section shown in Fig. 2D. The flange member 28 and the wall member 26 act to absorb a force applied to the seat 10 in the direction of the arrow X. When the force is applied initially the flange member 28 buckles, and begins to crack. Thereafter, the wall member 26, (including the transverse portion 34) fails progressively so that as the force is applied, the cracking of the flange member 28 spreads to the wall member 26 which cracks progressively in the direction from the flange member 28 to the securing rim 30. In the case of the regions of the seat shown at 2C and 2D, the cracking of the flange member 28 spreads to the transverse portion 34 which also cracks progressively. The cracking then spreads to the main part of the wall member 26. This buckling of the flange member 28 and progressive cracking of the wall member 26, including the transverse portion 34, progressively absorbs the force applied to the seat in the direction of the arrow X.

Also, the force absorbing means 24A will maintain its rigidity if a force is applied to the seats in the direction of the arrow Y in Fig. 1.

The head support region 16 comprises a raised area of the rear member 20 at the head support portion 16 to engage the head of the person sitting in the seat. Also, since the strengthening means 24 taper progressively towards the rear member 20, and terminate at the heat support portion 16, the rigidity of the seat 10 at the head support portion 16 is reduced.

In use, the seat 10 is supported by and fixed to an appropriate mounting 80, in the manner known in the art.

The pelvic support portion 14 has been designed to provide cushioning to a person sitting in the seat behind, facing the same direction. In a crash, the legs of the person behind will be projected forwards and will impact against the pelvic support portion 14 of the seat in front. Further movement of the legs will cause them to move towards the mounting 80. In the embodiment shown, the pelvic support portion 14 curves outwardly having a large radius of curvature, which may be greater than substantially 0.1m, thereby presenting a large surface area rearwardly of the seat, for impact by the legs of the person behind. The pelvic support portion could, if desired, be substantially planar, which would also present a large surface area rearwardly of the seat. The pelvic support portion 14 further includes a downwardly extending member 38 which prevents the legs of the person behind impacting against the mounting 80 upon which the seat 10 is mounted.

The leg support portion 18 defines, at the front thereof, an outwardly curving region, defined by the part of the skirting member 22 designated 22E. In the situations where the seat 10 faces another seat facing in the opposite direction, a crash could result in the legs of the person sitting opposite swinging out and impacting against the skirting member 22E. This region has a large radius of curvature, which may be greater than substantially 0.05m, or could be planar, and, therefore, provides cushioning in the event of impact by the legs of the person sitting opposite, thereby preventing injury. Also, as with the impact of the legs against the pelvic support region 14, the legs impacting against the front region of the leg support region 18 may impact against the mounting 80. This is prevented by the leg support region 18 defining a recess 82 into which the mounting 80 is received. In this way, the legs of the person in the seat in front are prevented from colliding against the mounting 80.

Various modifications can be made without departing from the scope of the invention.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A seat comprising a back support portion for supporting the back of a person, and a pelvic support portion extending below and forwardly of the back support portion for supporting the pelvic region of the person, characterised in that the pelvic support portion comprises a central area to receive the pelvic region of the person, and force absorbing means arranged at said central area, the force absorbing means having a generally triangular cross-sectional configuration, whereby the force absorbing means is adapted to absorb at least some of a force applied to the seat in the forward direction.

2. A seat according to Claim 1 characterised by first and second force absorbing means arranged at opposite sides of said central area.

3. A seat according to claim 1 or 2 characterised by a rear member extending from the back support portion to the pelvic support portion.

4. A seat according to claim 3 characterised by a skirting member, extending at leastpart way around the rear member.

5. A seat according to any preceding claim characterised in that the or each force absorbing means is adapted to fail progressively when said force is applied.

6. A seat according to any preceding claim characterised in that the or each force absorbing means comprises a wall member extending from the skirting member to the rear member to define said substantially triangular configuration.

7. A seat according to claim 6 characterised by a flange member extending substantially parallel to the skirting member and arranged in engagement with said skirting member.

8. A seat according to claim 6 or 7 characterised in that the or each force absorbing means is secured to the skirting member.

9. A seat according to claim 6, 7 or 8 characterised in that the wall member includes a transverse portion extending transversely from the flange member.

10. A seat according to claim 9 characterised in that the transverse portion extends substantially perpendicularly from the flange member, and increases progressively in width from the flange member in the direction from the upper end of the pelvic support portion to the lower end thereof.

11. A seat according to any of claims 6 to 10 characterised in that the wall member is in the form of an elongate substantially flat member extending along the seat at an oblique angle to said skirting member and said rear member.

12. A seat according to any preceding claim characterised in that the or each force absorbing means is formed of a material which is able to undergo brittle fracture failure.

13. A seat according to claim 9 characterised in that the or each force absorbing means is formed of a reinforced plastics material.

14. A seat comprising a back support portion for supporting the back of a person, a pelvic support portion extending below and forwardly of the back support portion, and a head support portion extending above the back support portion, the back support portion and the head support portion comprising a rear member, and the back support portion including force absorbing means wherein the force absorbing means tapers towards the rear member at the head support portion to reduce rigidity at said head support portion.

15. A seat according to claim 14 characterised by one of said force absorbing means at either side of the back support portion.

16. A seat according to claim 14 or 15 characterised in that the rear member at the head support portion includes a raised area and a surrounding area, the surrounding area being substantially co-planar with said back support portion.

17. A seat comprising a back support portion for supporting the back of a person and a pelvic support portion extending below and forwardly of the back support portion, for supporting the pelvic region of the person, characterised in that the pelvic support portion comprises a central area having a large surface area.

18. A seat according to claim 17 characterised in that the pelvic support portion further includes a downwardly extending member, at the lower region of said pelvic support portion.

19. A seat according to claim 17 or 18 characterised in that the pelvic support portion curves outwardly of the seat, with a radius of curvature greater than substantially 0.01m, preferably greater than substantially 0.1m.

20. A seat according to claim 19 characterised in that the pelvic support portion is substantially planar.

21. A seat comprising a back support portion for supporting the back of a person, a pelvic support portion for supporting the pelvic region of the person, and a leg support portion for supporting the legs of a person, characterised in that the leg support portion has a collapsible front area.

22. A seat according to claim 21 characterised in that the front area is curved and has a large surface area.

23. A seat according to claim 21 or 22 characterised in that the front area of the leg support region curves outwardly, with a radius of curvature greater than substantially 0.01m, preferably greater than substantially 0.05m.

24. A seat according to claim 23 characterised in that the leg support region is substantially planar.

25. A seat according to any of claims 21 to 24 characterised in that the leg support portion extends downwardly to define a recess to receive a mounting for the seat.

26. A seat substantially as herein described with reference to the accompanying drawings.

27. Any novel subject matter or combination including novel subject matter disclosed, whether or not within the scope of or relating to the same invention as any of the preceding claims.
